**Europäisches Patentamt**

**European Patent Office**

**Office européen des brevets**

(19)

(11) Veröffentlichungsnummer: **0 159 485**
**B1**

# (12) EUROPÄISCHE PATENTSCHRIFT

(45) Veröffentlichungstag der Patentschrift:
02.09.87

(21) Anmeldenummer: **85101662.6**

(22) Anmeldetag: **15.02.85**

(51) Int. Cl.⁴: **B 29 D 22/00**, B 29 C 43/04,
B 29 C 43/36

(54) **Verfahren und Vorrichtung zum Herstellen von schalenartigen Formkörpern.**

(30) Priorität: **02.03.84 DE 3407765**

(43) Veröffentlichungstag der Anmeldung:
**30.10.85 Patentblatt 85/44**

(45) Bekanntmachung des Hinweises auf die Patenterteilung:
**02.09.87 Patentblatt 87/36**

(84) Benannte Vertragsstaaten:
**FR GB IT SE**

(56) Entgegenhaltungen:
**DE-A-1 683 783**
**DE-A-2 306 507**
**DE-A-3 205 185**
**DE-A-3 205 186**
**FR-A-1 565 075**
**GB-A-1 557 317**
**US-A-3 320 044**
**US-A-4 385 955**

(73) Patentinhaber: **Deutsche Basaltsteinwolle GmbH,
Rodetal 40, D-3406 Bovenden 1 (DE)**

(72) Erfinder: **Baier, Franz, Erdbeerweg 6A, D-7562
Gernsbach 3 (DE)**

(74) Vertreter: **Patentanwälte Dipl.- Ing. Rudolf
Bibrach Dipl.- Ing. Elmar Rehberg, Postfach 1453
Pütterweg 6, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren und eine Vorrichtung zur Herstellung von schalen- oder rohrartigen Formkörpern, insbesondere Hohlkörpern, aus zumindest teilweise mittels eines Kunstharzbinders formstabilisierter Mineralwolle, indem zunächst ein bahnförmiges Vlies aus Mineralwolle hergestellt wird, welches den nicht ausgehärteten Kunstharzbinder enthält oder hinzugefügt bekommt, und die Mineralwolle in einer beheizbaren Preßform zu dem oder den Formkörpern ausgehärtet wird. Die Vorrichtung zur Durchführung des Verfahrens arbeitet mit einer Vlieslegeeinrichtung und einer beheizbaren, teilbaren Preßform.

Derartige schalen- oder rohrartige Formkörper aus formstabilisierter Mineralwolle werden insbesondere als Schalldämpf-Füllungen in Auspufftöpfen für Verbrennungsmotore eingesetzt. Der Formkörper muß dabei eine dimensionsstabile Form aufweisen, damit er in das Gehäuse des Auspufftopfs leicht eingesetzt werden kann. Auch Gegenstände für Isolationszwecke sind damit herstellbar. Insbesondere geht es um die Herstellung von Hohlkörpern, also Körpern, die nicht nur eine Außenkontur, sondern auch eine Innenkontur aufweisen.

Bei einem bekannten Verfahren der eingangs beschriebenen Art (FR-A-1 565 075) wird zunächst ein bahnförmiges Vlies aus Mineralwolle hergestellt, wobei die Mineralwolle mit dem noch nicht ausgehärteten Kunstharzbinder behandelt, beispielsweise besprüht wird. Von dem Vlies werden Abschnitte abgeteilt, was entweder von Hand durch einen Schneidvorgang oder maschinell durch einen Stanzvorgang geschehen kann. Auf diese Weise entstehen Zuschnitte, die jeweils in eine geteilte Form eingelegt werden. Nach dem Schließen der Ober- und Unterform wird die Form samt dem darin eingeschlossenen Zuschnitt in einem Ofen aufgeheizt, wobei der Kunstharzbinder ausgehärtet und der Formkörper auf diese Weise seine Form erhält. Die Maßgenauigkeit des Formkörpers ist von der Sorgfalt der Abteilung der Zuschnitte und der Einbringung derselben in die Form abhängig.

Es ist auch bekannt, die Unterform mit einer umlaufenden Nut auszustatten, in die die Mineralwolle entsprechend ihrem Fließvermögen eindringt, so daß auf diese Art und Weise ein Schließgrat gebildet ist, der dafür sorgt, daß der Formkörper beim Öffnen der Form in der Unterform hängenbleibt, aus der heraus er dann entformt werden kann.

Die DE-A-2 306 507 zeigt ein Verfahren zur Herstellung von gepreßten Profilkörpern mit langgestreckt stetigen Übergängen aus einem nicht steigfähigen Gemisch von Faser, z. B. auch von Glasfaser, Steinwolle oder Asbestfaser, die mit einem wärmehärtbaren Bindemittel vermischt sind. Dieses nicht steigfähige Gemisch wird zunächst Kalt vorgepreßt und dann in eine beheizbare Preßform eingebracht, zu seiner endgültigen Form gepreßt und dabei ausgehärtet.

Aus der US-A-4 385 955 ist ein Verfahren zur Herstellung von plattenförmigen Formkörpern aus kunstharzimprägnierten Glasfasern bekannt, welches zweistufig arbeitet. Es sind zwei Oberformen und zweckmäßig nur eine Unterform vorgesehen. In der ersten Form findet nur eine Teilaushärtung des Materials im einen Oberflächenbereich statt, um hier Falten und Unebenheiten zu vermeiden. In der zweiten Form wird die Gegenkontur in ihre endgültige Form gebracht und der Formkörper vollständig ausgehärtet. Auch dieses Verfahren arbeitet nicht unmittelbar von dem Vlies her, sondern unter Verwendung von Zuschnitten. Es können auch zwei Zuschnitte in der Form übereinandergelegt werden, um örtliche Dichteunterschiede am Formkörper auszugleichen.

Bei diesen bekannten Verfahren geht es nicht so sehr um das Erreichen eines hohen Raumgewichts, sondern vielmehr um die Formgebung des Formkörpers. Sollen höhere Raumgewichte in der Größenordnung von 150 kg/m$^3$ erreicht werden, so ist es auch bekannt, mehrlagige Zuschnitte in eine Form einzubringen. Höhere Raumgewichte als 150 kg/m$^3$ sind damit kaum erreichbar.

Formkörper mit einem Raumgewicht bis zu 180 kg/m$^3$ können auch durch Fräsen aus entsprechendem Plattenmaterial hergestellt werden. Das Plattenmaterial wird mit Hilfe einer Vlieslegeeinrichtung und nachfolgend beidseitig angeordneten Bändern hergestellt, die sich auf das gelegte Vlies auflegen und ihm dabei die gewünschte Plattenstärke geben. Die Bänder sind beheizt bzw. von Dampf durchströmt, damit während des Durchlaufens des Materials die Aushärtung des Kunstharzbinders erfolgt. Durch den Fräsvorgang, mit dem derartige Formkörper aus Plattenmaterial hergestellt werden, entsteht ein relativ großer Abfall. Außerdem werden die Faser durchtrennt und damit zerstört. Es ergibt sich jedoch eine gute Maßhaltigkeit der dabei hergestellten Formkörper, die - bei entsprechender Ausbildung - zu je zwei Stück zu einem schalenartigen Hohlkörper zusammengesetzt werden.

Schließlich ist es bei der Herstellung von Hohlkörpern, die als Ganzes, also nicht als Halbschalen gefertigt werden, bekannt (DE-A-3 205 185 und DE-A-3 205 186) zunächst einen Kern mit dem bahnenartigen Vlies zu umwickeln. Anschließend wird die aufgewickelte Mineralwolle und der Kern mit einer Umfangsform umschlossen und dann thermisch ausgehärtet. Dabei sind Raumgewichte von bis zu 120 kg/m$^3$ erreichbar. Diese Herstellung ist besonders umständlich, lohnintensiv und energieaufwendig, da die Formen ebenso wie bei dem zunächst beschriebenen Verfahren jeweils aufgeheizt werden müssen. Die Maßhaltigkeit der Hohlkörper hängt hier in erster Linie von der Sorgfalt des Wickelns ab. In manchen Fällen ist eine Nacharbeit durch einen Säge- oder Schleifvorgang erforderlich, um die geforderten Dimensionen des Hohlkörpers toleranzmäßig einzuhalten.

Der Erfindung liegt die Aufgabe zugrunde, ein Verfahren und eine Vorrichtung aufzuzeigen, mit dem schalen- oder rohrartige Formkörper, insbesondere Hohlkörper, aus formstabilisierter Mineralwolle mit verbesserter Maßgenauigkeit und hohem Raumgewicht wirtschaftlich herstellbar sind.

Erfindungsgemäß wird dies dadurch erreicht, daß das Vlies unter Aushärtung des Kunstharzbinders unmittelbar zu dem oder den Formkörpern verpreßt wird und daß das Vlies dabei gegen Ende des Preßvorgangs in den oder die einzelnen Formkörper unterteilt und andererseits zur Bildung eines Scharniers örtlich sehr hoch verdichtet wird.

Die Erfindung löst sich von den bisher bekannten Arten der Herstellung von Formkörpern aus formstabilisierter Mineralwolle und wendet erstmals den Vorgang des Pressens in der speziellen Ausbildung des Formpressens unmittelbar ausgehend von dem Vlies an.

Dabei liegt der Gedanke zugrunde, daß eine vergleichsweise lockere Form des Vlieses durch das Formpressen in den Formkörper, mit den gewünschten Dimensionen und dem hohen Raumgewicht, überführt werden kann. Dies geschieht mit vergleichsweise verbesserter Maßgenauigkeit.

Weiter ist es sinnvoll, den Formpreßvorgang derart zu beenden, daß dabei das eingesetzte Vlies in die einzelnen Formkörper unterteilt wird; das Ende eines Preßvorgangs ist also gleichzeitig ein Abteilvorgang, in dem ein oder mehrere Formkörper direkt von dem Vlies abgeteilt werden. Das Vlies kann dabei bahnförmig auf eine Rolle aufgewickelt mit endlicher Länge eingesetzt werden oder direkt aus der Vlieslegeeinrichtung auslaufend taktweise benutzt werden. Durch die Anwendung dieses Verfahrens wird zunächst der im Stand der Technik immer vorhandene Verfahrensschritt des Bildens eines Zuschnitts für jeden Formkörper eingespart, weil der Abteilvorgang am Ende des Formpressens mit diesem kombiniert durchgeführt wird. Überraschenderweise lassen sich mit dem neuen Verfahren Formkörper von hohem Raumgewicht, beispielsweise von 200 kg/m$^3$ und mehr erzeugen, wie dies bisher nicht möglich war. Solche Formkörper, insbesondere Hohlkörper, mit derart hohem Raumgewicht der Mineralwolle werden für hohe Schalldämpfung insbesondere im Automobilbau benötigt, um den Geräuschpegel zu senken. Die Hohlkörper lassen sich sowohl als Halbschalen als auch als ganzschalige Körper herstellen, da das eingesetzte Vlies innerhalb seines Umrisses sehr hoch verdichtet wird, ohne einen Abtrennvorgang zu bewirken; auf diese Art und Weise läßt sich ein Scharnier bilden, um welches zwei darüber zusammenhängende Halbschalen dann z. B. zu einer Ganzschale zusammengeklappt werden können.

Durch die hohe Verdichtung ergibt sich eine gute und ausreichende Biegefestigkeit des Formkörpers um dieses Scharnier. Ein solcher Hohlkörper bietet im Gegensatz zu zwei Halbschalen eine Reihe von Vorteilen bei seiner weiteren Verwendung und Montage, z. B. in einem Auspufftopf.

Von besonderem wirtschaftlichem Vorteil ist die durch das neue Verfahren eröffnete Möglichkeit, die Formkörper - auch mit bisher nicht erreichbaren hohen Raumgewichten - mit kurzen Taktzeiten herzustellen, weil die Preßform immer ihre Arbeitstemperatur beibehalten kann und nicht jeweils für jede Halbschale neu aufgeheizt werden muß, wie dies beim Stand der Technik der Fall ist.

Besonders vorteilhaft ist es, wenn das Vlies taktweise bei jedem Preßvorgang in eine Vielzahl Formkörper verpreßt wird. Es versteht sich, daß von dieser Möglichkeit insbesondere dann Gebrauch gemacht wird, wenn relativ kleine Hohlkörper, wie sie bei Auspufftöpfen Anwendung finden, hergestellt werden. Die Preßform weist dann eine Vielzahl von Nutzräumen auf. Dabei kann das Vlies ohne Abfall zwischen den einzelnen Hohlkörpern verpreßt werden, weil die mehreren Nutzräume in der Form ohne weiteres direkt aneinander anschließend ausgebildet werden können. Das Unterteilen des Vlieses in die einzelnen Form- bzw. Hohlkörper erfolgt durch einen Schneid-/Stanzvorgang bzw. durch Abquetschen in bzw. vermittels der Preßform, die zumindest zweiteilig gestaltet ist.

Das Vlies kann auch mehrlagig verpreßt werden, wobei mehrere gleiche oder auch ungleiche Lagen eingesetzt werden können, um entweder hohe Raumgewichte oder auch spezielle Eigenschaften zu erzielen.

Die Vorrichtung zur Durchführung des Verfahrens arbeitet mit einer Vlieslegeeinrichtung und einer beheizbaren, teilbaren Preßform und kennzeichnet sich dadurch, daß eine Einrichtung zum taktweisen Einführen des Vlieses in die Preßform vorgesehen ist, und daß die Preßform zum Unterteilen des Vlieses in den oder die Formkörper und zur Scharnierbildung unter örtlich hoher Verdichtung des Vlieses ausgebildet ist.

Die Fasern der Mineralwolle werden somit mit dieser Vorrichtung in den Formkörper mit der gewünschten Dimension zusammengedrückt, wobei die Aushärtung bei geschlossener Preßform stattfindet. Die Maßhaltigkeit der damit hergestellten Formkörper liegt in sehr engen Toleranzen.

Die Einrichtung zum Einführen des Vlieses in die Preßform kann eine Abwickelvorrichtung zur Aufnahme des bahnförmig aufgewickelten Vlieses aufweisen. Von dieser Möglichkeit wird man insbesondere dann Gebrauch machen, wenn die Vlieslegeeinrichtung der Presse nicht unmittelbar vorgeschaltet sein muß oder soll. Es ist auch möglich, auf diese Art und Weise mehrere Vliesbahnen übereinander durch die Presse zu schicken. Ein besserer innerer Verbund der Mineralwolle ergibt sich freilich dann, wenn nur ein einlagiges Vlies verarbeitet wird.

Der wesentliche Teil einer zur Durchführung des Verfahrens geeigneten Vorrichtung ist in den Zeichnungen dargestellt und wird im Folgenden beschrieben. Es zeigt

Figur 1 eine Draufsicht auf den unteren Teil der Preßform,

Figur 2 einen Schnitt gemäß der Linie II-II,

Figur 3 eine Draufsicht auf den oberen Teil der Preßform,

Figur 4 einen Schnitt gemäß der Linie IV-IV in Figur 3 und

Figur 5 eine Seitenansicht des mit der Preßform gemäß den Figuren und 3 herstellbaren Hohlkörpers.

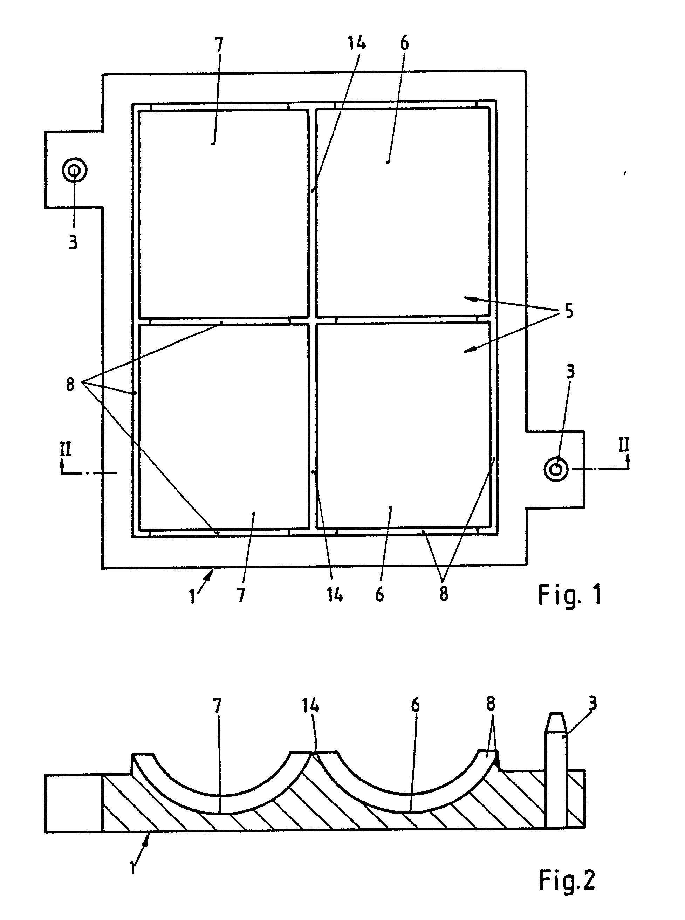

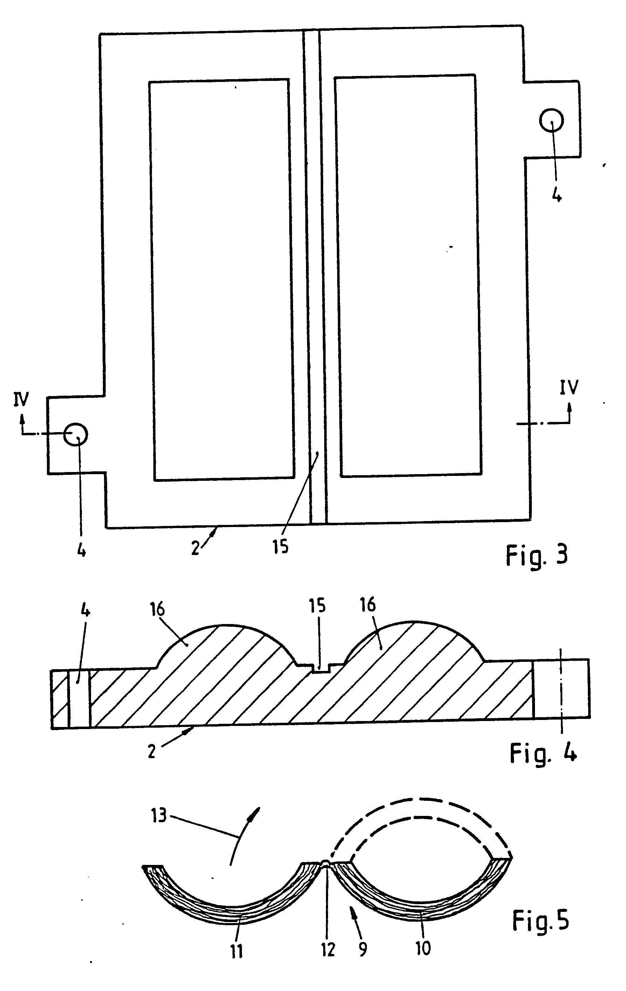

Die Preßform weist ein Formunterteil 1 (Figur 1) und ein Formoberteil 2 (Figur 3) auf, die aufeinander abgestimmt sind. Am Formunterteil 1 sind Positionierstifte 3 und am Formoberteil Bohrungen 4 vorgesehen, so daß das Formoberteil 2 paßgenau auf das Formunterteil aufgesetzt bzw. mit diesem zusammenarbeiten kann. Es versteht sich, daß das Formunterteil beispielsweise fest auf einem Preßtisch einer Presse montiert wird, während das Formoberteil über einen entsprechenden Antrieb der Presse heb- und senkbar dazu gehalten und geführt ist.

Im Formunterteil 1 sind zwei Nutzräume 5 unmittelbar nebeneinander angeordnet. Jeder Nutzraum 5 besteht aus zwei schalenförmigen Vertiefungen 6 und 7, die durch eine umlaufende Begrenzungswandung 8 umschlossen sind. Die beiden Vertiefungen 6 und 7 eines Nutzraums 5 dienen zur Herstellung eines Hohlkörpers 9 (Figur 5), der aus zwei Halbschalen 10 und 11 besteht, die über ein Scharnier 12 zusammenhängen und wie ein Pfeil 13 und die gestrichelte Darstellung der Halbschale 11 erkennen lassen, um das Scharnier 12 zu dem Hohlkörper 9 umschlagbar sind. Durch die Begrenzungswandung 8 wird der Umriß des Hohlkörpers 9 bzw. der beiden aufgeklappten Halbschalen 10 und 11 festgelegt. Die Begrenzungswandung 8 ist so ausgebildet, daß in Verbindung mit dem Formoberteil 2 die Preßform hier schließt bzw. ein Abtrennen des Mineralwollvlieses gegen Ende des Preßhubs erreichbar ist. Zur Ausbildung des Scharniers 12 besitzt die Unterform in jedem Nutzraum 5 einen Steg 14, der mit einer Rille 15 in dem Formoberteil 2 zusammenarbeitet. Steg 14 und Rille 15 sind bei vollkommen geschlossener Preßform, wenn sich also das Formoberteil maximal dem Formunterteil angenähert hat, immer noch in gewisser Entfernung voneinander, so daß hier die Mineralwolle nicht durchtrennt, sondern das Scharnier 12 gebildet wird. Das Formoberteil 2 besitzt ansonsten zwei Erhebungen 16, die durch die in Verbindung mit den Vertiefungen 6 und 7 die Wandstärke der Halbschalen 10 und 11 und ihre sonstige geometrische Gestaltung festgelegt sind.

Die Wirkungsweise der Gesamtvorrichtung wird hieraus verständlich. Es wird ein Vlies aus Mineralwolle gelegt, welches mit Kunstharzbinder z. B. eingesprüht wird. In dieser Form wird das Vlies als endloses Band oder in Form von Bandabschnitten von einer Rolle zwischen Formunterteil 1 und Formoberteil 2 in der geöffneten Stellung der Preßform eingeführt. Die Absenkbewegung des Formoberteils 2 führt dazu, daß je zwei der in Figur 5 dargestellten Hohlkörper 9 mit einem Preßhub erzeugt werden. Zwischen den beiden Nutzräumen 5 ist kein Abfall vorhanden. Die Vliesbahn kann dann um einen Takt weiterbewegt werden, so daß ein neuer Preßhub stattfinden kann, bei dem wiederum zwei Hohlkörper 9 entstehen. Es versteht sich, daß die Preßform auch eine wesentlich größere Anzahl als zwei Nutzraume 5 aufweisen kann, insbesondere dann, wenn der einzelne Hohlkörper 9 relativ kleinen Umriß aufweist. Es ist auch ohne weiteres möglich, die Preßform komplizierter zu gestalten, Kerne einzulegen usw., um komplizierteren Formgebungen eines Hohlkörpers Rechnung zu tragen.

Die Preßform wird beheizt (nicht dargestellt), so daß sie immer auf Arbeitstemperatur ist bzw. gehalten wird, so daß der vorher auf das Vlies aufgebrachte Kunstharzbinder während des Preßvorgangs aushärtet. Es kann auch eine Durchströmung des Hohlkörpers 9 mit Heißdampf oder Heißluft stattfinden, um das Aushärten zu beschleunigen. Die Preßform ist dann entsprechend auszubilden, d.h. mit Kanälen und Öffnungen für das Durchströmungsmittel auszustatten.

Durch den Preßvorgang sind Hohlkörper aus Mineralwolle mit sehr hohem Raumgewicht einfach herstellbar, auch mit Raumgewichten in der Größenordnung von 200 kg/m$^3$ und mehr, wie sie bisher nicht herstellbar waren. Durch den Preßvorgang selbst erhält der Hohlkörper eine schon als glatt zu bezeichnende Oberfläche, die sich durchaus auch ohne weitere Schutzmaßnahmen anfassen und handhaben läßt. Es entfällt damit beispielsweise das Umwickeln eines solchen Formkörpers mit einer Folie.

**Bezugszeichenliste:**

1 = Formunterteil
2 = Formoberteil
3 = Positionierstift
4 = Bohrung
5 = Nutzen
6 = Vertiefung
7 = Vertiefung
8 = Begrenzungswandung
9 = Hohlkörper
10 = Halbschale
11 = Halbschale

12 = Scharnier
13 = Pfeil
14 = Steg
15 = Rille
16 = Erhebung

**Patentansprüche**

1. Verfahren zur Herstellung von schalen- oder rohrartigen Formkörpern, insbesondere Hohlkörpern (9), aus zumindest teilweise mittels eines Kunstharzbinders formstabilisierter Mineralwolle, indem zunächst ein bahnförmiges Vlies aus Mineralwolle hergestellt wird, welches den nicht ausgehürteten Kunstharzbinder enthält oder hinzugefügt bekommt und die Mineralwolle in einer beheizbaren Preßform (1, 2) zu dem oder den Formkörpern ausgehärtet wird, dadurch gekennzeichnet, daß das Vlies unter Aushärtung des Kunstharzbinders unmittelbar zu dem oder den Formkörpern verpreßt wird und daß das Vlies dabei gegen Ende des Preßvorgangs einerseits in den oder in die einzelnen Formkörper unterteilt und andererseits zur Bildung eines Scharniers (12) örtlich sehr hoch verdichtet wird.

2. Verfahren nach Anspruch 1, dadurch gekennzeichnet, daß das Vlies taktweise bei jedem Preßvorgang in eine Vielzahl Formkörper verpreßt wird.

3. Verfahren nach Anspruch 1 und 2, dadurch gekennzeichnet, daß das Vlies ohne Abfall zwischen den einzelnen Formkörpern verpreßt wird.

4. Verfahren nach Anspruch 1, dadurch gekennzeichnet, daß das Unterteilen durch Schneiden bzw. Abquetschen erfolgt.

5. Verfahren nach Anspruch 1 bis 4, dadurch gekennzeichnet, daß das Vlies mehrlagig verpreßt wird.

6. Vorrichtung zur Durchführung des Verfahrens nach Anspruch 1 bis 5, mit einer Vlieslegeeinrichtung und einer beheizbaren, teilbaren Preßform (1, 2), dadurch gekennzeichnet, daß eine Einrichtung zum taktweisen Einführen des Vlieses in die Preßform vorgesehen ist, und daß die Preßform (1, 2) zum Unterteilen des Vlieses in den oder die Formkörper und zur Scharnierbildung unter örtlich hoher Verdichtung des Vlieses ausgebildet ist.

7. Vorrichtung nach Anspruch 6, dadurch gekennzeichnet, daß die Einrichtung zum Einführen des Vlieses in die Preßform (1, 2) eine Abwickelvorrichtung zur Aufnahme des bahnförmigen aufgewickelten Vlieses aufweist.

**Claims**

1. Method for manufacturing shell-like or tubular shaped articles, more particularly hollow articles (9), from mineral wool at least partially stabilized by means of synthetic resin bonding, in which a fibre web is produced from mineral wool which contains or has the unhardened synthetic resin bonding added, the mineral wool then being hardened in a heated press mould (1, 2) to form the moulded article(s), characterised in that when the synthetic resin bonding hardens the fibre web is compressed into the form of the moulded article(s) and that towards the end of the pressing process the fibre web is separated into the individual moulded articles and locally highly compressed to form a hinge (12).

2. Method according to claim 1 characterised in that the fibre web is compressed in cycles into a number of moulded articles during each pressing process.

3. Method according to claims 1 and 2 characterised in that the fibre web is compressed into the individual moulded articles without waste between them.

4. Method according to claim 1 characterised in that separation is carried out by means of cutting or squeezing off.

5. Method according to claims 1 to 4 characterised in that the fibre web can be compressed in multiple layers.

6. Device for implementing the method according to claims 1 to 5 with a fibre web laying device and a heated, separable press mould (1, 2) characterised in that a device for introducing the fibre web in cycles into the mould is provided and that the mould (1, 2) is designed to separate the fibre web into the moulded article(s) and to form a hinge by local high compression of the fibre web.

7. Device according to claim 6, characterised in that the device for introducing the fibre web into the mould (1, 2) has an unwinding mechanism for the spooled fibre web.

**Revendications**

1. Procédé pour la fabrication de corps moulés en forme de coquilles ou de tuyaux, en particulier de corps creux (9) en laine minérale dont la forme est stabilisée au moins partiellement au moyen d'un liant de résine de synthèse, dans lequel un fabrique d'abord une nappe de laine minérale en forme de bande, qui contient le liant de résine de synthèse non durci, ou à laquelle celui-ci est ajouté, et on fait durcir la laine minérale dans un moule de pressage (1, 2) chauffable pour former le ou les corps moulés, caractérisé par le fait que, le liant de résine de synthèse étant en cours de durcissement, la nappe est pressée immédiatement pour former le ou les corps moulés et que dans cette opération, la nappe est subdivisée, vers la fin de l'opération de pressage, pour former le ou les corps moulés individuels, et d'autre part est très fortement densifiée localement pour la formation d'une charnière (12).

2. Procédé selon la revendication 1, caractérisé par le fait que la nappe est pressée coup par coup à chaque opération de pressage pour former plusieurs corps moulés.

3. Procédé selon la revendication 1 ou 2, caractérisé par le fait que la nappe est pressée sans déchet entre les corps moulés individuels.

4. Procédé selon la revendication 1, caractérisé par le fait que la subdivision s'opère par découpe ou écrasement.

5. Procédé selon les revendications 1 à 4, caractérisé par le fait que la nappe est pressée en plusieurs couches.

6. Installation pour l'exécution du procédé selon les revendications 1 à 5, comportant un dispositif de façonnage de nappe et un moule de pressage (1, 2) chauffable et divisible, caractérisé par le fait qu'on prévoit un dispositif pour l'introduction coup par coup de la nappe dans le moulle de pressage et que le moule de pressage (1, 2) est conformé en vue de la subdivision de la nappe pour former le ou les corps moulés et de la formation d'une charniére avec densification locale élevée de la nappe.

7. Installation selon la revendication 6, caractérisée par le fait que le dispositif destiné à l'introduction de la nappe dans le moule de pressage (1, 2) présente un moyen de déroulage pour recevoir la nappe enroulée sous forme de bande.

Fig. 1

Fig.2

Fig. 3

Fig. 4

Fig. 5